# EUROPÄISCHE PATENTSCHRIFT

(11) **EP 0 505 525 B1**
(45) Veröffentlichungstag und Bekanntmachung des Hinweises auf die Patenterteilung: **23.08.1995**
(21) Anmeldenummer: 91915922.8
(22) Anmeldetag: 12.09.1991
(51) Int. Cl.: G08G 5/04

(54) **EINRICHTUNG ZUR VERHÜTUNG VON VOGELSCHLAG AN FLUGZEUGEN**
DEVICE FOR PREVENTING BIRD-STRIKES ON AIRCRAFT
DISPOSITIF POUR EVITER L'IMPACT D'OISEAUX SUR LES AVIONS

(30) Priorität: 14.09.1990 DE 4029206
(43) Veröffentlichungstag der Anmeldung: 30.09.1992
(73) Patentinhaber: Hella KG Hueck & Co., 59552 Lippstadt (DE)
(72) Erfinder: LEPPER, Werner, D-4782 Erwitte (DE); SCHMEES, Siegfried, D-4787 Geseke (DE); SCHULTE, Peter, D-5760 Arnsberg 24 (DE); NOLTE, Dieter, D-4787 Geseke (DE)
(86) Internationale Anmeldenummer: EP9101734
(87) Internationale Veröffentlichungsnummer: WO9205530

(56) Entgegenhaltungen:
- EP-A- 0 236 267
- GB-A- 2 137 828
- US-A- 4 422 016

## Beschreibung

### Einrichtung zur Verhütung von Vogelschlag an Flugzeugen

Die Erfindung betrifft eine Einrichtung zur Verhütung von Vogelschlag an Flugzeugen gemäß den Merkmalen im Oberbegriff des Anspruchs 1.

Aus der europäischen Patentanmeldung 0 236 267 A2 ist ein Verfahren und eine Vorrichtung zur Verhütung von Vogelschlag dieser Art bekannt. Der Vogelschlag an Flugzeugen wird dabei mittels mindestens einer am Flugzeug angebauten Lichtblitze erzeugenden Lichtquelle verhütet. Die Frequenz der erzeugten Lichtblitze wird dabei während mindestens einer Zykluszeit variiert. Dabei wird die Frequenz der erzeugten Lichtblitze in einem Bereich zwischen ca. 0,1 Hz und 3 Hz ein oder mehrere Male kontinuierlich gesteigert, um dann auf der Maximalfrequenz festgehalten zu werden. Die Einrichtung ist dabei sowohl bei dem Start als auch bei dem Landeanflug des Flugzeugs einschaltbar.

Bei den bisher bekannten Einrichtungen erweist sich jedoch als nachteilig, daß unabhängig von der Frequenz der erzeugten Lichtblitze jeder Lichtblitz eine in etwa gleiche Lichtstärke aufweist, so daß bei zunehmender Frequenz der erzeugten Lichtblitze der Lichtquelle zunehmend mehr Leistung zugefuhrt wird, wodurch es erforderlich ist, zum einen die Versorgungseinrichtung der Lichtquelle groß zu dimensionieren, was zu hohen Kosten und zu hohem Platzbedarf führt und zum anderen eine Lichtquelle, das heißt, hier eine Entladungslampe zu verwenden, die geeignet ist, die hohen thermische Verlustleistungen, die bei hohen Blitzfolgefrequenzen auftreten, abzuführen, wodurch die Lichtquelle kostenintensiv ist und einen hohen Platzbedarf in Anspruch nimmt.

Aus der britischen Patentanmeldung GB-A-2 137 828 ist ein Stroboskop-Licht-System bekannt, das für den Einsatz in Diskotheken bzw. auf Bühnen bestimmt ist. Dieses Stroboskop-Licht-System weist mindestens eine Lichtquelle, die eine Entladungslampe ist, auf und verfügt über eine Steuereinrichtung, über die die Frequenz der zu erzeugenden Lichtblitze variiert werden kann. Der mindestens einen Lichtquelle ist dabei eine Versorgungseinrichtung zugeordnet, die aus einem Spannungswandler und mindestens einem Kondensator besteht. Der Spannungswandler gibt bei variierender Frequenz der erzeugten Lichtblitze eine konstante Leistung ab. Die Variation der Frequenz der Lichtblitze durch die Steuereinheit erfolgt bevorzugt in Abhängigkeit von dem Rhythmus einer Musik.

Aus dem US-Patent US-4,422,016 ist ebenfalls eine Einrichtung zur Erzeugung von Lichtblitzen bekannt, bei der einer Entladungslampe ein Ladekondensator und eine Versorgungseinrichtung zugeordnet ist. Bei dieser Einrichtung erweist sich als nachteilig, daß der Versorgungseinrichtung eine aufwendige, kostenintensive Leistungsregelung zugeordnet ist, die dafür sorgt, daß der Entladungslampe eine konstante Leistung zugeführt wird. Hierbei erweist sich besonders nachteilig, daß bei der Erhöhung der Frequenz der Lichtblitze aufgrund der Verminderung der Spannung an dem Ladekondensator bei einer oberen Grenzfrequenz die Entladungslampe durch die an dem Ladekondensator anliegende Spannung nicht mehr zündfähig ist.

Der Erfindung liegt die Aufgabe zugrunde, eine Einrichtung und ein Verfahren zur Verhütung von Vogelschlag an Flugzeugen zu schaffen, die einfach und kostengünstig sind und die die Verlustleistungen reduzieren.

Die Aufgabe wird durch die Merkmale des Anspruchs 1 gelöst.

Es ist von Vorteil, daß der mindestens einen Lichtquelle eine Versorgungseinrichtung zugeordnet ist, die aus mindestens einem Spannungswandler und mindestens einem Kondensator besteht und daß der Spannungswandler bei variierender Frequenz der erzeugten Lichtblitze eine konstante Leistung abgibt, weil somit, ohne die Wirkung der Einrichtung einzuschränken, die zur Verfügung gestellte Energie besser ausgenutzt wird und aufgrund der annähernd konstanten Leistung, die der Lichtquelle zugeführt wird, sowohl der Spannungswandler als auch die Lichtquelle in kostengünstiger und einfacher Weise eine kompakte Bauweise aufweisen können, die den verringerten Verlustleistungen angepaßt sind, wodurch sowohl Platz als auch Gewicht eingespart werden können.

Bei hohen Blitzfrequenzen und gleichzeitig hohen Blitzenergien ist bekannt, daß zusätzliche Steuereinrichtungen zur sicheren Lichtbogenlöschung innerhalb kurzer Zeit der Entladungslampe erforderlich sind. Durch die konstante Leistungsabgabe des Spannungswandlers nimmt bei zunehmender Blitzfrequenz die Energie der Blitze ab. Zusätzliche Steuereinrichtungen zur sicheren Löschung des Lichtbogens innerhalb kurzer Zeit können somit entfallen.

Dadurch, daß dem Spannungswandler ein Hilfswandler zugeordnet ist und daß der Hilfswandler mit einem zweiten Kondensator verbunden ist, der parallel zu der Lichtquelle angeordnet ist, ergibt sich der Vorteil, daß bei zunehmender Frequenz der erzeugten Lichtblitze die für ein Durchzünden der Lichtquelle erforderliche Spannung jederzeit zur Verfügung steht, wodurch die Betriebssicherheit und die Funktionssicherheit der erfindungsgemäßen Einrichtung erhöht wird.

Ein Ausführungsbeispiel der Einrichtung zur Verhütung von Vogeischlag an Flugzeugen ist in den Zeichnungen dargestellt und wird im folgenden näher beschrieben.

Es zeigen
Figur 1 ein Blockschaltbild einer Einrichtung zur Verhütung von Vogelschlag an Flugzeugen,
Figur 2 ein Diagramm des Spannungsverlaufs an der Lichtquelle (L) in Abhängigkeit von der Frequenz der Lichtblitze.

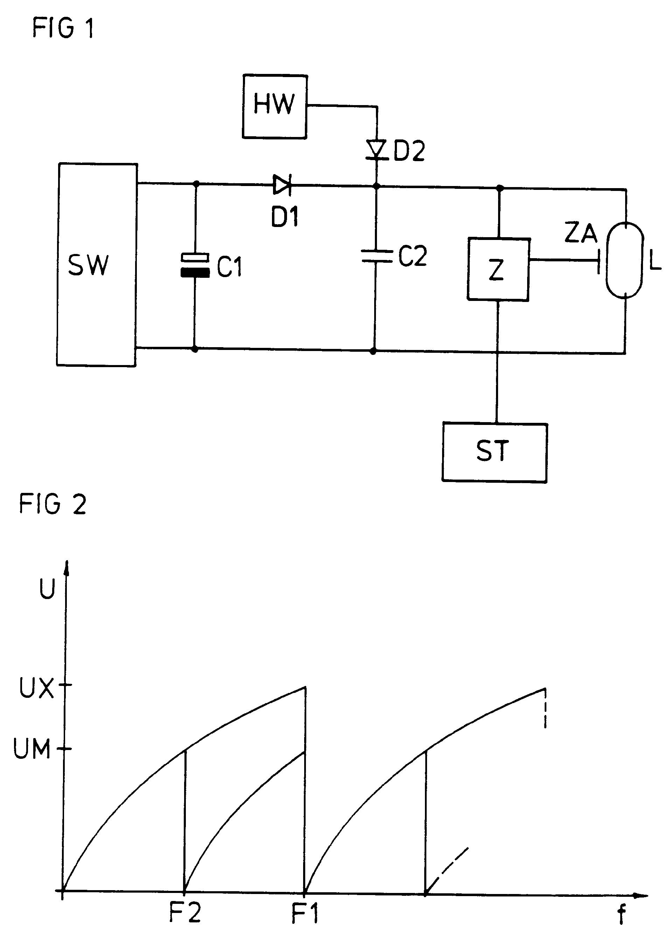

Die in Figur 1 gezeigte Einrichtung weist einen Spannungswandler (SW) auf, dessen Anschlüsse an die Versorgungsspannung hier nicht gezeigt sind und parallel zu dessen Ausgängen ein erster Kondensator (C1) angeordnet ist, der als Ladungsspeicher dient. Der Spannungswandler (SW) ist dabei so ausgelegt, daß er eine weitgehend konstante Leistungsabgabe aufweist. Die erste Elektrode des ersten Kondensators (C1) ist elektrisch leitend über eine erste Diode (D1) mit der Anode der Lichtquelle (L) verbunden, die hier als eine Entladungslampe ausgebildet ist. Die zweite Elektrode des Kondensators (C1) ist elektrisch leitend mit der Kathode der Lichtquelle (L) verbunden. Eine Zündeinrichtung (Z) ist zum einen elektrisch leitend mit der Anode der Lichtquelle (L) und zum anderen elektrisch leitend mit einer Steuereinrichtung (ST) verbunden. Zudem ist die Zündeinrichtung (Z) elektrisch leitend mit der Zündanode (ZA) der Lichtquelle (L) verbunden. Entsprechend der Ansteuerung durch die Steuereinrichtung (ST) erzeugt die Zündeinrichtung (Z) Zündsignale, die der Zündanode (ZA) zugeführt werden und die dazu dienen, das Durchzünden der Lichtquelle (L) einzuleiten.

Zum Beispiel bei dem Start eines Flugzeugs wird die Einrichtung automatisch oder manuell aktiviert und entsprechend einem vorgegebenen Zeitablauf oder gesteuert durch andere Parameter die Frequenz der erzeugten Lichtblitze variiert, das heißt, vorzugsweise in einer oder mehreren Zykluszeiten bis zu einer maximalen Frequenz erhöht.

In Figur 2 ist ein Diagramm aufgezeigt, das beispielhaft den Spannungsablauf an der Anode der Lichtquelle (L) in Abhängigkeit von der Frequenz der Lichtblitze darstellt.

Bei einer ersten vorgegebenen Frequenz (F1) liegt dabei an der Anode der Lichtquelle (L) eine Spannung (UX) an, die sicherstellt, daß die Lichtquelle (L) durchzündet. Bei einer zweiten Frequenz (F2) der erzeugten Lichtblitze, die hier beispielhaft etwa der doppelten Frequenz entspricht, wird, da der Spannungswandler (SW) eine konstante Leistung liefert, an der Anode der Lichtquelle (L) nur noch die Spannung (UM) anstehen, die hier beispielhaft als die Mindestspannung für das Durchzünden der Lichtquelle (L) gewählt ist.

Um sicherzustellen, daß die Lichtquelle (L) auch bei noch höheren Frequenzen sicher und zuverlässig durchzündet, ist, wie aus Figur 1 erkennbar, parallel zu der Lichtquelle (L) ein zweiter Kondensator (C2) angeordnet, der von einem Hilfswandler (HW) mit Energie versorgt wird. Die Spannung des zweiten Kondensators (C2) wird durch den Hilfswandler (HW) auf eine konstante Spannung geregelt, unabhängig vom Ladezustand des ersten Kondensators (C1), so daß die zur Einleitung des Zündvorgangs erforderliche Mindestanodenspannung der Lichtquelle (L) zur Verfügung gestellt wird. Es wird somit auf besonders einfache und kostengünstige Weise sichergestellt, daß ohne das Entstehen von hohen Verlustleistungen und bei Verwendung kleiner, kompakter und kostengünstiger Bauelementen ein zuverlässiges und sicheres Zünden der Lichtquelle bei allen Frequenzen möglich ist. In der Verbindung zwischen dem zweiten Kondensator (C2) und dem Hilfswandler (HW) ist hier beispielhaft eine zweite Diode (D2) angeordnet, die als Entkopplung des Hilfswandlers (HW) dient, ebenso wie die erste Diode (D1) zur Entkopplung des Spannungswandlers (SW) dient. Die Spannungsversorgung des Hilfswandlers (HW) ist hier nicht gezeigt.

Durch die erfindungsgemäße Einrichtung wird zudem sichergestellt, daß auch bei einem Landeanflug, bei dem die Frequenz von der maximalen Frequenz bis auf eine minimale Frequenz reduziert wird, die Lichtblitze mit hoher Zuverlässigkeit und Wirksamkeit erzeugt werden.

Als besonders vorteilhaft erweist sich dabei, daß eine aufwendige Leistungsregelung, die zudem für Störungen sorgen könnte, für den zuverlässigen Betrieb nicht erforderlich ist.

Es hat sich als vorteilhaft erwiesen, zwei Lichtquellen (L) an dem Flugzeug anzubringen. Diese Lichtquellen (L) können von einer gemeinsamen Versorgungseinrichtung und von einer gemeinsamen Steuereinrichtung (ST) angesteuert werden. Zur Erhöhung der Systemsicherheit und der Betriebssicherheit können aber auch zwei getrennte Einrichtungen verwendet werden.

## Patentansprüche

1. Einrichtung zur Verhütung von Vogelschlag an Flugzeugen, mit mindestens einer Lichtquelle am Flugzeug, die eine Entladungslampe ist, und mit einer Steuereinrichtung, die die Frequenz der erzeugten Lichtblitze während mindestens einer Zykluszeit variiert, dadurch gekennzeichnet, daß der mindestens einen Lichtquelle eine Versorgungseinrichtung zugeordnet ist, die aus mindestens einem Spannungswandler (SW) und mindestens einem ersten Kondensator (C1) besteht, daß der Spannungswandler (SW) bei variierender Frequenz der erzeugten Lichtblitze eine konstante Leistung abgibt, daß dem Spannungswandler (SW) ein Hilfswandler (HW) zugeordnet ist, daß der Hilfswandler (HW) mit einem zweiten Kondensator (C2) verbunden ist, der parallel zu der Lichtquelle (L) angeordnet ist, daß parallel zu dem Spannungswandler (SW) der erste Kondensator (C1) angeordnet ist, daß die erste Elektrode des ersten Kondensators (C1) mit der Anode der Lichtquelle (L) verbunden ist und daß die zweite Elektrode des ersten Kondensators (C1) mit der Kathode der Lichtquelle (L) verbunden ist, daß in der Verbindung zwischen dem ersten Kondensator (C1) und der Anode der Lichtquelle (L) eine erste Diode (D1) angeordnet ist, daß parallel zur Lichtquelle (L) ein zweiter Kondensator (C2) angeordnet ist, daß der zweite Kondensator (C2) mit einem Hilfswandler (HW) verbunden ist, daß eine Zündeinrichtung (Z) zum einen mit der Anode der Lichtquelle (L) verbunden ist und zum anderen mit der Steuereinrichtung (ST) verbunden ist und daß die Zündeinrichtung (Z) mit der Zündanode (ZA) der Lichtquelle (L) verbunden ist.

2. Einrichtung nach Anspruch 1, dadurch gekennzeichnet, daß in der Verbindung zwischen dem zweiten Kondensator (C2) und dem Hilfswandler (HW) eine zweite Diode (D2) angeordnet ist.

## Claims

1. A device for preventing bird impact on aircraft, having at least one light source on the aircraft which is a discharge lamp, and having a controller which varies the frequency of the photoflashes produced during at least one cycle period, characterised in that a supply device is associated with the at least one light source, which supply consists of at least one voltage transformer (SW) and of at least one first capacitor (C1), that the voltage transformer (SW) delivers a constant output as the frequency of the photoflashes produced varies, that an auxiliary transformer (HW) is associated with the voltage transformer (SW), that the auxiliary transformer (HW) is connected to a second capacitor (C2) which is disposed in parallel with the light source (L), that the first capacitor (C1) is disposed in parallel to the voltage transformer (SW), that the first electrode of the first capacitor (C1) is connected to the anode of the light source (L) and that the second electrode of the first capacitor (C1) is connected to the cathode of the light source (L), that a first diode (D1) is disposed in the connection between the first capacitor (C1) and the anode of the light source (L), that a second capacitor (C2) is disposed in parallel with the light source (L), that the second capacitor (C2) is connected to an auxiliary transformer (HW), that an igniter device (Z) is connected firstly to the anode of the light source (L) and secondly to the controller (ST), and that the igniter device (Z) is connected to the igniter anode (ZA) of the light source (L).

2. A device according to claim 1, characterised in that a second diode (D2) is disposed in the connection between the second capacitor (C2) and the auxiliary transformer (HW) .

## Revendications

1. Dispositif pour empêcher un impact d'oiseau sur des avions, comportant au moins, sur l'avion, une source lumineuse qui est une lampe à décharge, ainsi qu'un dispositif de commande qui fait varier la fréquence des éclats lumineux produits pendant au moins une durée de cycle, caractérisé par le fait qu'à la source lumineuse, dont il y a au moins une, correspond un dispositif d'alimentation qui est constitué d'au moins un transformateur de tension (SW) et d'au moins un premier condensateur (C1), que le transformateur de tension (W) fournit une puissance constante pour une fréquence variable des éclats lumineux produits, qu'au transformateur de tension (SW) correspond un transformateur auxiliaire (HW), que le transformateur auxiliaire (HW) est relié à un second condensateur (C2) disposé en parallèle à la source lumineuse (L), qu'en parallèle au transformateur de tension (SW) est disposé le premier condensateur (C1), que la première armature du premier condensateur (C1) est reliée à l'anode de la source lumineuse (L) et que la seconde armature du premier condensateur (C1) est reliée et à la cathode de la source lumineuse (L), que dans liaison entre le premier condensateur (C1) et l'anode de la source lumineuse (L) est disposée une première diode (D1), qu'en parallèle à la source lumineuse (L) est disposé un second condensateur (C2), que le second condensateur (C2) est relié à un transformateur auxiliaire (HW), qu'un dispositif d'amorçage (Z) est relié d'une part à l'anode de la source lumineuse (L) et d'autre part au dispositif de commande (C) et que le dispositif d'amorçage (Z) est relié à l'anode d'amorçage (ZA) de la source lumineuse (L).

2. Dispositif selon la revendication 1, caractérisé par le fait que dans la liaison entre le second condensateur (C2) et le transformateur auxiliaire (HW) est disposée une seconde diode (D2).
